# FASCICULE DE BREVET EUROPEEN

(11) **EP 2 770 827 B1**
(45) Date de publication et mention de la délivrance du brevet: **17.07.2019**
(21) Numéro de dépôt: 12770145.6
(22) Date de dépôt: 11.10.2012
(51) Int. Cl.: A01N 25/02, A01N 25/04, A01P 3/00, A01P 7/04

(54) **COMPOSITION, PROCÉDÉ D'OBTENTION DE LA COMPOSITION ET FORMULATION PHYTOSANITAIRE LA COMPRENANT**
ZUSAMMENSETZUNG, VERFAHREN ZUR HERSTELLUNG DER ZUSAMMENSETZUNG UND PFLANZENSCHUTZFORMULIERUNG DAMIT
COMPOSITION, METHOD FOR PRODUCING THE COMPOSITION, AND PHYTOSANITARY FORMULATION CONTAINING SAME

(30) Priorité: 13.10.2011 FR 1159258
(43) Date de publication de la demande: 03.09.2014
(73) Titulaire: Rhodia Operations, 93306 Aubervilliers (FR)
(72) Inventeur: VIDAL, Thierry, F-69003 Lyon (FR); ABRIBAT, Benoit, F-77310 Saint Fargeau Ponthierry (FR); BRAMATI, Valerio, I-20020 Arese (Milan) (IT); BALASTRE, Marc, F-75020 Paris (FR)
(74) Mandataire: Cardon, Flavie
(86) Numéro de dépôt international: PCT/EP2012/070172
(87) Numéro de publication internationale: WO 2013/053834

(56) Documents cités:
- WO-A1-2009/092795
- WO-A2-2011/113852
- FR-A1- 2 926 699
- US-A- 4 506 051
- DATABASE CAPLUS [Online] CHEMICAL ABSTRACTS SERVICE, COLUMBUS, OHIO, US; ANON.: "Branched esteramides, diamides or mixtures thereof and their use as solvent in phytosanitary formulations", XP002669970, extrait de STN Database accession no. 2010:575587 -& ANONYMOUS: "Branched esteramides, diamides or mixtures thereof and their use as solvent in phytosanitary formulations (NO. IPCOM000194387D)", IP.COM JOURNAL, vol. 10(4A), no. 12, 22 mars 2010 (2010-03-22), pages 1-37, XP002669971, ISSN: 1533-0001
- DATABASE CAPLUS [Online] CHEMICAL ABSTRACTS SERVICE, COLUMBUS, OHIO, US; ANON.: "Use of the new esteramide Rhodiasolv Polarclean in order to replace solvents with bad HSE profiles such as N-methyl pyrrolidone (NMP), dimethyl formamide (DMF), dimethyl acetamide (DMAC), or flammable solvents such as acetone, in various applications", XP002669972, extrait de STN Database accession no. 2011:176392 -& ANON.: "Use of the new esteramide Rhodiasolv Polarclean in order to replace solvents with bad HSE profiles such as N-methyl pyrrolidone (NMP), dimethyl formamide (DMF), dimethyl acetamide (DMAC), or flammable solvents such as acetone, in various applications (NO. IPCOM000202894D)", IP.COM JOURNAL, vol. 11(B), no. 10-11, 7 janvier 2011 (2011-01-07), XP002669973, ISSN: 1533-0001

## Description

La présente invention a pour objet une composition, notamment utilisable comme composition solvante dans des formulations phytosanitaires, son procédé d'obtention et des formulations phytosanitaires la comprenant.

L'industrie utilise de nombreux composés chimiques à titre de solvants, par exemple pour préparer des produits chimiques et des matériaux, pour formuler des composés chimiques, ou pour traiter des surfaces. Par exemple, des solvants sont utilisés pour la formulation d'actifs phytosanitaires notamment sous forme de concentrés émulsionnables (Emulsifiable Concentrate "EC") destinés à être dilués dans de l'eau par l'exploitant agricole, avant application sur un champ.

Ainsi, les formulations phytosanitaires doivent permettre une dilution en poids aisée par l'exploitant agricole, afin d'obtenir un produit dans lequel le produit phytosanitaire est correctement dispersé, par exemple sous forme de solution, d'émulsion, de suspension, ou de suspo-émulsion. Les formulations phytosanitaires permettent ainsi le transport d'un produit phytosanitaire sous forme relativement concentrée, un conditionnement aisé et/ou une manipulation aisée pour l'utilisateur final. Différents types de formulations phytosanitaires peuvent être utilisés selon les différents produits phytosanitaires. On cite par exemple les concentrés émulsionnables (Emulsifiable Concentrates "EC"), les émulsions concentrées (Emulsion in water "EW"), les microémulsions ("ME"), les poudres mouillables (Wettable Powders "WP") et les granulés dispersables dans l'eau (Water Dispersible Granules, "WDG"). Les formulations qu'il est possible d'utiliser dépendent de la forme physique du produit phytosanitaire (par exemple solide ou liquide), et de ses propriétés physico-chimiques en présence d'autres composés comme l'eau ou les solvants.

Après dilution en poids par l'exploitant agricole, par exemple par mélange avec de l'eau, le produit phytosanitaire peut se trouver sous différentes formes physiques : solution, dispersion de particules solides, dispersion de gouttelettes du produit, gouttelettes de solvant dans lequel le produit est dissous... Les formulations phytosanitaires comprennent généralement des composés permettant d'obtenir ces formes physiques. Il peut par exemple s'agir de tensioactifs, de solvants, de supports minéraux, et/ou de dispersants. Bien souvent ces composés n'ont pas un caractère actif, mais un caractère d'intermédiaire d'aide à la formulation. On souhaite donc bien souvent en limiter la quantité afin de limiter les coûts et/ou une éventuelle nocivité pour l'environnement. Les formulations phytosanitaires peuvent notamment être sous forme liquide, ou sous forme solide.

Pour des raisons pratiques (par exemple pour des raisons de facilité de manipulation et/ou de transport), on peut préférer parfois utiliser des formulations phytosanitaires sous forme solide, et parfois utiliser des formulations sous forme liquide.

Afin de préparer des formulations phytosanitaires de produits phytosanitaires actifs solides, il est connu de solubiliser le produit dans un solvant. La formulation phytosanitaire comprend ainsi une solution du produit dans le solvant. La formulation peut être sous forme solide, par exemple sous forme de poudre mouillable (WP) où la solution adsorbée un support inorganique, par exemple du kaolin et/ou de la silice. La formulation peut alternativement être sous forme liquide, par exemple sous forme de concentré émulsionnable (EC) présentant une seule phase liquide limpide comprenant le solvant et le produit en solution, pouvant former une émulsion par ajout d'eau, sans agitation ou avec une faible agitation. Elle peut aussi être sous forme d'une émulsion concentrée (EW), trouble, dont la phase dispersée dans l'eau comprend le solvant et le produit en solution dans le solvant. Elle peut aussi être sous forme d'une microémulsion (ME), limpide, dont la phase dispersée dans l'eau comprend le solvant et le produit en solution dans le solvant.

Certains actifs phytosanitaires solides sont souvent difficiles à formuler. Par exemple, le tebuconazole est un fongicide particulièrement efficace, et d'utilisation répandue, pour la culture du soja notamment. Pour certains actifs phytosanitaires, il est difficile de réaliser des formulations concentrées, faciles à diluer pour l'exploitant agricole, stables, et sans inconvénients (avérés ou perçus) substantiels en matière de sécurité, de toxicité et/ou d'éco-toxicité. Pour certains actifs, il est difficile de formuler à des concentrations relativement élevées, avec une stabilité suffisante. En particulier, il est nécessaire d'éviter l'apparition de cristaux en particulier à basse température et/ou lors de la dilution et/ou lors du stockage à température élevée de la composition diluée. Les cristaux peuvent avoir des effets négatifs, notamment boucher les filtres des dispositifs utilisés pour répandre la composition diluée, boucher les dispositifs de pulvérisation, diminuer l'activité globale de la formulation, créer des problèmes inutiles de filières de déchets pour éliminer les cristaux, et/ou provoquer une mauvaise répartition du produit actif sur le champ agricole.

L'utilisation de systèmes solvants à base de N-méthylpyrrolidone (NMP) comme co-solvant est connue. Ce co-solvant permet d'améliorer la solubilisation de grand nombre d'actifs, et d'éviter la formation de cristaux, mais il est toutefois avéré comme reprotoxique comme présentant des dangers, notamment pour les opérateurs et les utilisateurs le manipulant. Il existe un besoin pour des systèmes solvants alternatifs, présentant notamment :
- une grande modularité, c'est-à-dire une faculté à être utilisé pour un grand nombre d'actifs,
- une solubilisation de quantités importantes d'actifs,
- une grande compatibilité des plusieurs actifs afin de palier aux phénomènes de résistance,
- une absence de cristallisation, même dans des conditions exigeantes, et/ou
- un profil de sécurité, toxicologique et/ou éco-toxicologique perçu comme favorable.

L'industrie agrochimique est à la recherche de nouvelles compositions solvantes présentant des propriétés satisfaisantes pour l'application phytosanitaire, comme par exemple un bon pouvoir solvant des actifs phytosanitaires ainsi qu'une faible miscibilité à l'eau. De plus, les compositions solvantes doivent avoir un coût modeste, présenter un profil toxicologique et/ou écologique favorable, notamment une faible toxicité et/ou une faible dangerosité, une faible volatilité (faible VOC) et une bonne biodégradabilité.

On connaît notamment des composés tel que le Polarclean® ou le NMP ou le DMSO qui sont de bons solvants des actifs phytosanitaires. Cependant leur non-miscibilité à l'eau est encore perfectible, notamment lorsque l'application visée est la préparation de concentrés émulsionnables.

On connaît aussi des composés comme les diméthyl octa décamides ou les alkyldiméthylamides (ADMA), qui sont non-miscibles à l'eau mais qui n'ont pas un pouvoir solvant satisfaisant sur une large gamme d'actifs.

La difficulté dans le domaine est donc de fournir un composé qui ait à la fois un bon pouvoir solvant et des propriétés de miscibilité dans l'eau satisfaisantes.

FR 2 926 699 et WO 2009/092795 décrivent des esteramides ou des mélanges d'esteramides, utilisés comme solvants par exemple dans des formulations phytosanitaires.

Le document IP 194387D concerne des esteramides ramifiés, des diamides ou leurs mélanges, ainsi que leurs utilisations comme solvants dans des formulations phytosanitaires.

Pour pallier les inconvénients précités, la présente invention propose une nouvelle composition qui présente à la fois un bon pouvoir solvant et des propriétés de miscibilité dans l'eau satisfaisantes.

Ainsi, la présente invention concerne une composition comprenant :
∘ de 10% à 90% en poids d'un mélange M de composés A de formule (I) :

   R¹CONR²R³ (I)

   ledit mélange comprenant au moins deux composés A répondant à des formules (I) différentes ;
   où :
   - R¹ est un groupe de formule -Z-COOR', Z étant un groupe alkylène divalent linéaire ou ramifié comprenant de 2 à 4 atomes de carbone et R' étant un groupe méthyle;
   - R² et R³, identiques ou différents, sont des groupes méthyle ou éthyle ; et
∘ de 10% à 90 % en poids d'au moins un composé B choisi parmi les solvants amides, éventuellement en association avec un solvant ester, les solvants amides étant choisis parmi les composés de formule (II) :

   R"-CONMe₂ (II)

   R" étant un groupe alkyle, linéaire ou ramifié, comprenant de 8 à 20 atomes de carbone.

Ainsi, les compositions de l'invention comprennent un mélange de plusieurs composés de formule (I), et notamment d'au moins deux composés distincts.

Selon l'invention, le mélange M comprend au moins deux composés différents, et donc répondant à la formule (I) avec des valeurs de R¹, R² ou R³ différentes.

De préférence, le mélange M est un mélange de deux composés différents répondant chacun à la formule (I).

Selon un mode de réalisation, le mélange M est un mélange de composés de formule (I-1) R'OOC-Z-CONR²R³, dans laquelle Z, R', R² et R³ sont tels que définis ci-dessus.

Selon un mode de réalisation, le mélange M est un mélange de composés de formule (I-2) MeOOC-Z-CONR²R³, dans laquelle Z, R', R² et R³ sont tels que définis ci-dessus.

Selon un mode de réalisation, le mélange M est un mélange de composés de formule (I-3) MeOOC-Z-CONR²R³, dans laquelle R', et R³ sont tels que définis ci-dessus, et Z est un groupe alkyle ramifié comprenant de 2 à 4 atomes de carbone.

Selon un mode de réalisation, le mélange M est un mélange de composés de formule (I) comprenant :
- un composé de formule (I) où R¹ est -CH(CH₂-CH₃)-CH₂-COOMe,
- un composé de formule (I) où R¹ est -CH₂-CH(CH₂-CH₃)-COOMe,
- un composé de formule (I) où R¹ est -CH(CH₃)-CH₂-CH₂-COOMe, et
- un composé de formule (I) où R¹ est -CH₂-CH₂-CH(CH₃)-COOMe.

Selon un mode de réalisation, le mélange M de composés de formule (I) tel que défini ci-dessus comprend en outre un composé de formule (I) où R¹ est -(CH₂)₄-COOMe.

Ainsi, les compositions de l'invention peuvent comprendre un composé A de formule suivante MeOOC-(CH₂)₄-CONR²R³, R² et R³ étant tels que définis ci-dessus.

Selon un mode de réalisation, le mélange M comprend au moins un composé A de formule (I) dans laquelle R² et R³ sont des groupes méthyle.

Une famille particulière de composés A selon l'invention répond donc à la formule R¹CONMe₂.

Selon l'invention, le composé B est un solvant amide ou un mélange de plusieurs solvants amides, les solvants amides répondant à la formule (II) suivante :

R"-CONMe₂ (II)

R" étant un groupe alkyle, linéaire ou ramifié, comprenant de 8 à 20 atomes de carbone.

Selon un mode de réalisation, le composé B est un solvant amide tel que défini ci-dessus.

Ainsi, selon un mode de réalisation, les compositions selon l'invention comprennent, voire sont constituées de, un solvant amide tel que défini ci-dessus et un mélange M de composés de formule (I-1) telle que définie ci-dessus.

Selon un mode de réalisation, les compositions selon l'invention comprennent, voire sont constituées de, un solvant amide tel que défini ci-dessus et un mélange M de composés de formule (I-2) telle que définie ci-dessus.

Selon un mode de réalisation, les compositions selon l'invention comprennent, voire sont constituées de, un solvant amide tel que défini ci-dessus et un mélange M de composés de formule (I-3) telle que définie ci-dessus.

A titre de composé B, on peut par exemple citer un mélange comprenant au moins un solvant amide tel que défini ci-dessus et au moins un solvant ester.

Selon un mode de réalisation, le composé B est un mélange constitué d'un solvant amide tel que défini ci-dessus et d'un solvant ester.

Ainsi, selon un mode de réalisation, les compositions selon l'invention comprennent un solvant amide tel que défini ci-dessus, un solvant ester et un mélange M de composés de formule (I-1) telle que définie ci-dessus.

Ainsi, selon un mode de réalisation, les compositions selon l'invention comprennent un solvant amide tel que défini ci-dessus, un solvant ester et un mélange M de composés de formule (I-2) telle que définie ci-dessus.

Ainsi, selon un mode de réalisation, les compositions selon l'invention comprennent un solvant amide tel que défini ci-dessus, un solvant ester et un mélange M de composés de formule (I-3) telle que définie ci-dessus.

Parmi les solvant amides, on peut notamment citer les composés de formule (II) où R" est choisi parmi les alkyles linéaires en C8, C10, C12, C18 et leurs mélanges, en toutes proportions.

Selon un mode de réalisation, le composé B peut également comprendre en outre un solvant aromatique ou un mélange de tels solvants.

Parmi les solvants aromatiques, on peut notamment citer le toluène, le xylène et des mélanges de C8-C12 di- et trialkylbenzènes comme le Solvesso®.

Parmi les hydrocarbures aromatiques, on peut citer les alkylbenzènes comme le toluène, les dialkylbenzènes comme le xylène, les hydrocarbures aromatiques polynucléaires comme les naphtalènes, les alkylnaphtalènes (par exemple le diméthylnaphtalène), les dialkylnaphtalènes, les trialkylnaphtalènes comme le diméthylmonoisopropylnaphtalène et le phénylxylyléthane, ainsi que leurs mélanges.

La plupart de ces hydrocarbures sont obtenus par fractionnement de pétrole brut et ont en général des gammes de distillation comprises de environ 135°C à environ 305°C, ceux avec des températures de environ 183°C à environ 290°C étant préférés.

Parmi les hydrocarbures aromatiques, on peut également citer les produits commerciaux suivants : Nisseki Hisol SAS-296 (mélange de 1-phényl-1-xylyléthane et 1-phényl-1-éthylphényléthane, Nippon Oil Corporation), Cactus Solvent HP-MN (méthylnaphtalène 80%, Japan Energy Corporation), Cactus Solvent HP-DMN (diméthylnaphtalène 80%, Japan Energy Corporation), Cactus Solvent P-100 (alkylbenzène avec 9 à 10 atomes de carbone, Japan Energy Corporation), Cactus Solvent P-150 (alkylbenzène, Japan Energy Corporation), Cactus Solvent P-180 (mélange de méthylnaphtalène et diméthylnaphtalène, Japan Energy Corporation), Cactus Solvent P-200 (mélange de méthylnaphtalène et diméthylnaphtalène, Japan Energy Corporation), Cactus Solvent P-220 (mélange de méthylnaphtalène et diméthylnaphtalène, Japan Energy Corporation), Cactus Solvent PAD-1 (diméthylmonoisopropylnaphtalène, Japan Energy Corporation), Solvesso 100 (hydrocarbure aromatique, Exxon Mobil Corporation), Solvesso 150 (hydrocarbure aromatique, Exxon Mobil Corporation), Solvesso 200 (hydrocarbure aromatique, Exxon Mobil Corporation), ULTRA LOW NAPHTHALENE AROMATIC 150 (ExxonMobil Chemical Company), ULTRA LOW NAPHTHALENE AROMATIC 200 (ExxonMobil Chemical Company), Solvesso 150 ND (hydrocarbure aromatique, Exxon Mobil Corporation), Solvesso 200 ND (hydrocarbure aromatique, Exxon Mobil Corporation), Swasol 100 (toluène, Maruzen Petrochemical Co. Ltd.) et Swasol 200 (xylène, Maruzen Petrochemical Co. Ltd.).

On peut en particulier citer les mélanges de C8-C12 di- et trialkylbenzènes avec un point flash d'au moins 60,5°C.

De tels mélanges sont disponibles dans le commerce, notamment auprès de Exxon Mobil sous les noms Solvesso 150® et Solvesso 200®.

Selon un mode de réalisation, le composé B peut comprendre en outre un solvant ester ou un mélange de tels solvants.

Parmi les solvants esters, on peut notamment citer le 2-éthylhexyl-lactate, les acétates d'alkyle, les esters d'acides gras, les esters gras d'acides carboxyliques et les mélanges de diesters méthyliques d'acide 2-éthylsuccinique, d'acide méthylglutarique et éventuellement d'acide adipique comme le Rhodiasolv® IRIS.

Selon un mode de réalisation, les compositions selon l'invention comprennent un ester d'acide gras, par exemple un ester d'huile de canola, et en particulier un ester méthylique d'huile de canola.

Selon un mode de réalisation, les solvants esters des compositions selon l'invention sont des esters d'acides carboxyliques, de préférence des mélanges de plusieurs esters d'acides carboxyliques.

De préférence, les solvants esters des compositions selon l'invention répondent à la formule R_{α}OOC-A-COOR_{α}, R_{α} représentant un groupe alkyle, linéaire ou ramifié, comprenant de 1 à 6 atomes de carbone, et de préférence représentant un groupe méthyle, et A représentant un groupe alkylène, linéaire ou ramifié, comprenant de 2 à 4 atomes de carbone.

Selon un mode de réalisation, le solvant ester est le composé Rhodiasolv® IRIS qui est un mélange comprenant de 70% à 95% en poids de 2-méthylglutarate de diméthyle, de 5% à 30% en poids d'éthylsuccinate de diméthyle et de 0 à 10% en poids d'adipate de diméthyle.

Le composé B peut être un mélange de solvants. Ainsi, le composé B peut être soit un mélange de solvants amides tel que défini ci-dessus, soit un mélange d'un solvant amide tel que défini ci-dessus et d'un solvant ester, soit un mélange de solvants amides tel que défini ci-dessus avec un solvant ester, soit un mélange de solvants amides tel que défini ci-dessus et de solvants esters, ou encore l'un des mélanges ci-dessus comprenant en outre au moins un solvant aromatique.

La présente invention concerne également une composition telle que définie ci-dessus, comprenant :
- de 20% à 60% en poids du mélange M tel que défini ci-dessus, et
- de 40% à 80% en poids du composé B tel que défini ci-dessus.

Selon un mode de réalisation particulier, la présente invention concerne une composition telle que définie ci-dessus, comprenant :
- de 20% à 60% en poids d'un mélange M de composés de formule (I) comprenant :
   - un composé de formule (I) où R¹ est -CH(CH₂-CH₃)-CH₂-COOMe,
   - un composé de formule (I) où R¹ est -CH₂-CH(CH₂₋CH₃)-COOMe,
   - un composé de formule (I) où R¹ est -CH(CH₃)-CH₂-CH₂-COOMe,
   - un composé de formule (I) où R¹ est -CH₂-CH₂-CH(CH₃)-COOMe, et
   - le cas échéant un composé de formule (I) où R¹ est -(CH₂)₄-COOMe ;
- de 40% à 80% en poids du composé B tel que défini ci-dessus.

Selon un mode de réalisation, les compositions selon l'invention sont constituées d'un mélange de composés esteramides de formule (I), en particulier correspondant au mélange tel que défini ci-dessus, d'un solvant amide tel que défini ci-dessus, de préférence de formule R"-CONMe₂, R" représentant une chaîne alkyle linéaire en C10, et d'un solvant ester, de préférence choisi parmi les esters, notamment méthyliques, d'acides carboxyliques ou les esters, notamment méthyliques, d'acide gras.

Selon un mode de réalisation particulier, la présente invention concerne une composition telle que définie ci-dessus, comprenant :
- de 20% à 60% en poids d'un mélange M de composés de formule (I) comprenant :
   - un composé de formule (I) où R¹ est -CH(CH₂-CH₃)-CH₂-COOMe,
   - un composé de formule (I) où R¹ est -CH₂-CH(CH₂-CH₃)-COOMe,
   - un composé de formule (I) où R¹ est -CH(CH₃)-CH₂-CH₂-COOMe,
   - un composé de formule (I) où R¹ est -CH₂-CH₂-CH(CH₃)-COOMe, et
   - le cas échéant un composé de formule (I) où R¹ est -(CH₂)₄-COOMe ;
- de 30% à 70% en poids d'un solvant amide tel que défini ci-dessus ; et
- de 0% à 25% en poids d'un solvant ester tel que défini ci-dessus.

Selon un mode de réalisation particulier, la présente invention concerne une composition telle que définie ci-dessus, comprenant :
- de 40% à 60% en poids d'un mélange M de composés de formule (I) comprenant :
   - un composé de formule (I) où R¹ est -CH(CH₂-CH₃)-CH₂-COOMe,
   - un composé de formule (I) où R¹ est -CH₂-CH(CH₂-CH₃)-COOMe,
   - un composé de formule (I) où R¹ est -CH(CH₃)-CH₂-CH₂-COOMe,
   - un composé de formule (I) où R¹ est -CH₂-CH₂-CH(CH₃)-COOMe, et
   - le cas échéant un composé de formule (I) où R¹ est -(CH₂)₄-COOMe ; et
- de 40% à 60% en poids d'un solvant amide tel que défini ci-dessus.

Selon un mode de réalisation particulier, la présente invention concerne une composition telle que définie ci-dessus, comprenant :
- de 30% à 55% en poids d'un mélange M de composés de formule (I) comprenant :
   - un composé de formule (I) où R¹ est -CH(CH₂-CH₃)-CH₂-COOMe,
   - un composé de formule (I) où R¹ est -CH₂-CH(CH₂-CH₃)-COOMe,
   - un composé de formule (I) où R¹ est -CH(CH₃)-CH₂-CH₂-COOMe,
   - un composé de formule (I) où R¹ est -CH₂-CH₂-CH(CH₃)-COOMe, et
   - le cas échéant un composé de formule (I) où R¹ est -(CH₂)₄-COOMe ;
- de 30% à 55% en poids d'un solvant amide tel que défini ci-dessus ; et
- de 10% à 25% en poids d'un solvant ester tel que défini ci-dessus.

La présente invention concerne également un procédé d'obtention d'une composition de solvants ayant une solubilité dans l'eau inférieure ou égale à 1% en poids à 20-25°C, caractérisé en ce que l'on mélange de 10% à 90% en poids d'au moins un mélange M tel que défini ci-dessus avec de 10% à 90% en poids d'au moins un composé B tel que défini ci-dessus.

La présente invention concerne également l'utilisation de la composition telle que définie ci-dessus comme solvant ayant une solubilité dans l'eau inférieure ou égale à 1% en poids à 20-25°C.

La présente invention concerne également une formulation phytosanitaire comprenant au moins un actif phytosanitaire et, à titre de solvant d'au moins un actif phytosanitaire, la composition telle que définie ci-dessus.

La formulation phytosanitaire est généralement une formulation phytosanitaire concentrée comprenant un composé actif phytosanitaire.

L'agriculture utilise de nombreuses matières actives telles que des fertilisants ou des pesticides, par exemple des insecticides, herbicides ou fongicides. On parle de produits phytosanitaires actifs (ou de matière active). Les produits phytosanitaires actifs sont généralement produits sous forme pure ou très concentrée. Ils doivent être utilisés sur les exploitations agricoles à de faibles concentrations. A cette fin, ils sont généralement formulés avec d'autres ingrédients afin de permettre une dilution en poids aisée par l'exploitant agricole. On parle de formulations phytosanitaires. La dilution opérée par l'exploitant agricole est généralement réalisée par mélange de la formulation phytosanitaire avec de l'eau.

Selon un mode de réalisation particulier, la formulation phytosanitaire de l'invention est sous la forme d'un concentré émulsionnable, d'une émulsion concentrée ou d'une microémulsion.

Les formulations comprenant le solvant de l'invention, à savoir la composition comprenant au moins un mélange M et au moins un composé B, présentent notamment :
- une solubilisation de quantités importantes d'actifs,
- une absence de cristallisation, même dans des conditions exigeantes,
- une bonne activité biologique pouvant être due à une bonne solvatation, et/ou
- un profil de sécurité, toxicologique et/ou eco-toxicologique perçu comme favorable.

La formulation phytosanitaire peut en outre être une formulation phytosanitaire concentrée comprenant :
a) un produit phytosanitaire actif,
b) le solvant (composition selon la présente invention)
c) éventuellement au moins agent émulsifiant, de préférence un tensioactif, et
d) éventuellement de l'eau.

Des produits phytosanitaires actifs, notamment des produits non solubles dans l'eau et solides sont connus de l'homme du métier. Le produit phytosanitaire actif peut notamment être un herbicide, un insecticide, un acaricide, un fongicide, ou un agent d'élimination des rongeurs ("rodenticide" en anglais) par exemple un raticide.

Comme exemples d'insecticides et acaricides convenant à l'invention, on peut citer ceux qui appartiennent aux familles :
- des organo-halogénés ou chlorés tels que par exemple le D.D.T. (dichloro diphényl trichloro-éthane), le lindane (isomère y de l'hexachloro-cyclohexane), le chlordane (octachlorotétrahydro méthano indène), le toxaphène ;
- des carbinols tels que par exemple le dicofol (dichlorophényl trichloroéthanol) ;
- des organophosphorés tels que par exemple le bromophos [(4-bromo-2,5-dichloro-phenoxy)-dimethoxy-thioxo-phosphorane), le diazinon (O,O-diéthyl-O-(2-isopropyl-6-méthyl-pyrimidin-4-yl)phosphorothioate), le féni-trothion (O,O-diméthyl-O-nitro-4-m-tolylphosphorothioate), le malathion (S-1,2-bis(éthoxycarbonyl)éthyl-O,O-diméthyl-phosphorodithioate), le parathion (O,O-diéthyl-O-nitro-4-phénylphosphorothioate), le trichlorfon (diméthyl-2,2,2-trichloro-1-hydroxy-éthylphosphonate], le diméthoate (O,O-diméthyl-S-méthylcarbamoylméthyl phosphorodithioate) ;
- des sulfones et sulfonates tels que par exemple le tétradifon (tétrachloro diphénylsulfone) ;
- des carbamates tels que par exemple le carbaryl (N-méthylcarbamate de naphtyle), le méthomyl (N-méthylcarbamate de (méthylthio éthylidène amine)) ;
- des benzoylurées tel que par exemple le diflubenzuron (difluoro benzoyl chlorophénylurée] ;
- les pyrethrinoides de synthèse ;
- les acaricides tels que par exemple le cyhéxatin (tricyclohexyl-hydroxystannane).

Les fongicides susceptibles d'être mis en oeuvre dans l'invention peuvent par exemple être choisis parmi :
- les carbamates comme par exemple le bénomyl (butylcarbamoyl benzimidazolyl carbamate de méthyle), le carbendazime (benzimidazolyl carbamate de méthyle), le zirame (diméthyl dithiocarbamate de zinc), le zinèbe (ethylène-bis dithiocarbamate de zinc), le manèbe (ethylène-bis dithiocarbamate de manganèse), le mancozèbe (éthylène-bis dithiocarbamate de zinc et de manganèse), le thirame (disulfure de bis diméthyl-thiocarbamoyle) ;
- les dérivés du benzène comme par exemple le PCNB (pentachloronitrobenzène) ;
- les dérivés du phénol comme par exemple le dinocap (crotonate de (méthylheptyl)dinitrophényl) ;
- les quinones comme par exemple le dithianon (dioxodihydro naphto dithiine dicarbonitrile) ;
- les dicarboximides comme par exemple le captane (trichlorométhylthio tétrahydroisoindolinedione), le folpel (trichlorométhylthio isoindolinedione), l'iprodione (dichlorophényl isopropyl carbamoyl dichlorophényl-hydantoïne) ;
- les amines et amides comme par exemple le bénodanil (iodobenzanilide), le métalaxyl (diméthylphényl méthoxyacétyl alalinate de méthyle) ;
- les diazines comme par exemple le pyrazophos (thiophosphate d'éthyle et d'éthoxycarbonyl méthyl pyrazolo pyrimidine), le fénarimol (chlorophényl chlorophényl pyrimidine méthanol) ;
- les sulfamides et dérivés soufrés comme par exemple le dichlofluanide (dichloro fluoro méthylthiodiméthyl phényl sulfamide) ;
- les guanidines comme par exemple la doguadine (acétate de dodécylguanidine) ;
- les hétérocycles comme par exemple l'étridiazole (éthoxy trichlorométhyl thiadiazole), le triadiméfon (chlorophénoxy diméthyltriazol butanone) ;
- les monoéthyl phosphites métalliques comme par exemple le phoséthyl-Al (tris-O-éthylphosphonate d'aluminium) ;
- les organostanniques comme par exemple le fentine-acétate (triphényl étain].

A titre de substances chimiques présentant des propriétés herbicides, on peut faire appel à ceux qui se retrouvent dans les formules chimiques suivantes :
- les composés phénoliques tels que, par exemple, le dinosèbe (dinitrobutylphénol) ;
- les carbamates tels que, par exemple, le phenmédiphame (tolylcarbamoyloxyphényl carbamate de méthyle) ;
- les urées substituées tels que, par exemple, le néburon (butyl dichlorophényl méthyl urée), le diuron (dichlorophényl diméthyl urée), le linuron (dichlorophényl méthoxyméthyl urée) ;
- les diazines tels que, par exemple, le bromacil (bromobutyl méthyl uracile), le chloridazone (phénylamino chloropyridazone),
- les triazines tels que, par exemple, la simazine (chloro bis-éthylamino s-triazine), l'atrazine (chloroéthylamino isopropylamino-s-triazine), la terbuthylazine (chloroéthylamino butylamino s-triazine), le terbuméton (tert-butylamino éthylamino méthoxy triazine), le prométryne (méthylthio bis isopropylamino s-triazine), l'amétryne (méthylthio éthylamino isopropylamino s-triazine), la métribuzine (méthylthio butylamino triazine-one), la cyanazine (chloro éthylamino s-triazine-ylaminométhyl-propionitrile) ;
- les amides tels que, par exemple, le napropamide (naphtoxydiéthyl propionamide), le propachlore- (isopropyl chloroacétanilide] ;
- les ammoniums quaternaires ;
- les benzonitriles ;
- les toluidines tels que, par exemple, l'éthalfluraline (dinitro-éthylméthyl propényl trifluoro méthylaniline), l'oryzalin (dinitrodipropyl sulphanil-amide) ;
- les triazoles ;
- les dérivés divers tels que, par exemple, le bénazoline ((acide chloro oxo benzothiazoline acétique), le diméfuron (chloro oxo tert-butyl oxadiazoline phényl diméthyl urée), le bromophénoxime (dibromo hydroxy dinitro phényl benzaldoxime], le pyridate (chlorophénylpyridazinylcarbothiolate octyle).

Comme autres exemples de biocides pouvant être utilisés selon l'invention on peut citer les nématicides, les molluscicides etc.. Il est possible de mettre en oeuvre une ou plusieurs matières actives appartenant à la même classe de biocides ou à une classe différente.

Ainsi, à titre d'exemples non limitatifs de matières actives préférées, on peut citer entre autres l'Amétryne, le Diuron, le Linuron, le Chlortoluron, l'Isoproturon, le Nicosulfuron, le Metamitron, le Diazinon, l'Aclonifen, l'Atrazine, le Chlorothalonil, le Bromoxynil, le Bromoxynil heptanoate, le Bromoxynil octanoate, le Mancozeb, la Manèbe, le Zineb, la Phenmédipham, le Propanyl, la série des phénoxyphénoxy, la série des hétéroaryloxyphénoxy, le CMPP, le MCPA, le 2,4-D, la Simazine, les produits actifs de la série des imidazolinones, la famille des organophosphorés, avec notamment l'Azinphos-éthyl, l'Azinphos-méthyl, l'Alachlore, le Chlorpyriphos, le Diclofop-méthyl, le Fénoxaprop-p-éthyl, le Méthoxychlore, la Cyperméthrine, le Fenoxycarbe, le cymoxanil, le chlorothalonyl, les insecticides neonicotinoides, la famille des fongicide triazoles tels que l'azaconazole, bromuconazole, cyproconazole, difenoconazole, diniconazole, epoxyconazole, fenbuconazole, flusilazole, myclobutanyl, tebuconazole, triadimefon, triadimenol, des strobilurines telles que la pyraclostrobine, la picoxystrobine, l'azoxystrobine, la famoxadone, le kresoxym-méthyl et la trifloxystrobine, les solfonylurées telles que le bensulfuron-méthyl, le chlorimuron-éthyl, le chlorsulfuron, le metsulfuron-méthyl, le nicosulfuron, le sulfomethuron-méthyl, le triasulfuron, le tribenuron-méthyl.

On choisit parmi cette liste les produits non-hydrosolubles.

On peut notamment mettre en oeuvre les produits phytosanitaires actifs suivants :

| | |
|---|---|
| Alachlor | 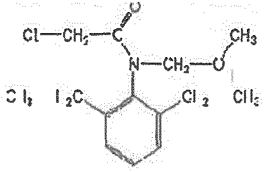 |
| Chlorpyrifos | 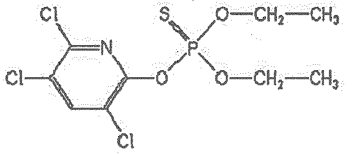 |
| alpha-cyperméthrine | 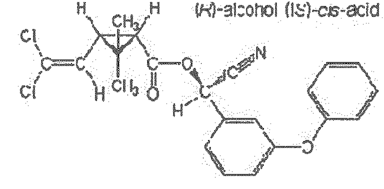 |
| | 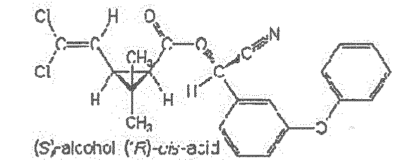 |
| | En mélange racémique et/ou en stéréoisomères isolés. |
| Phenmedipham | 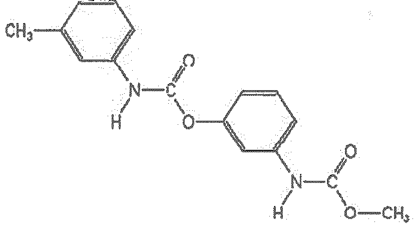 |
| Propanil | 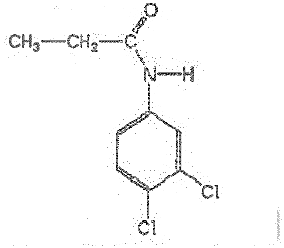 |
| Pendimethalin | 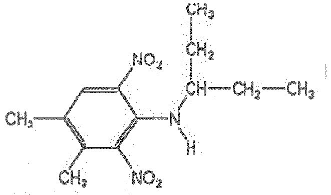 |
| triadimenol | 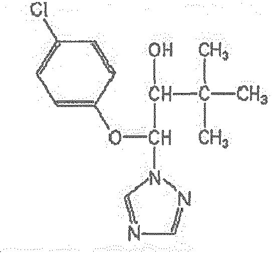 |
| Trifluralin | 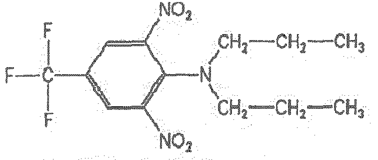 |
| Oxyfluorfen | 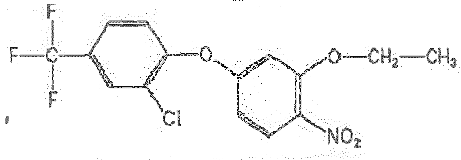 |
| Dimethoate | 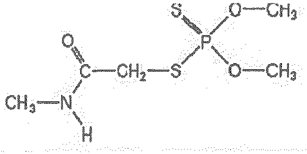 |
| Imidacloprid | 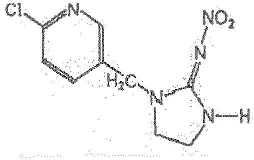 |
| Proxopur | 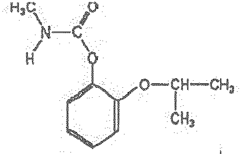 |
| Benomyl | 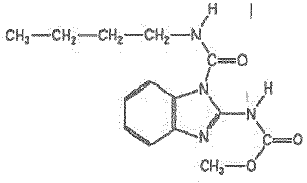 |
| Deltamethrine | 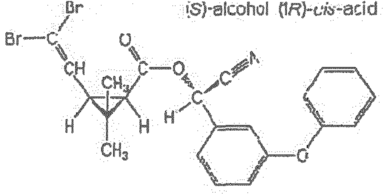 |
| Fenvalerate | 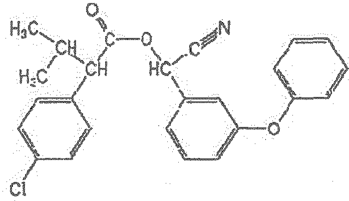 |
| Abamectin | 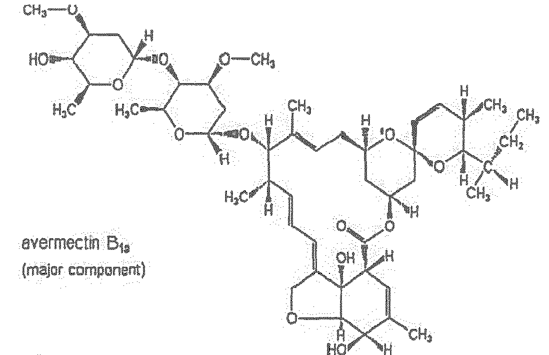 |
| | 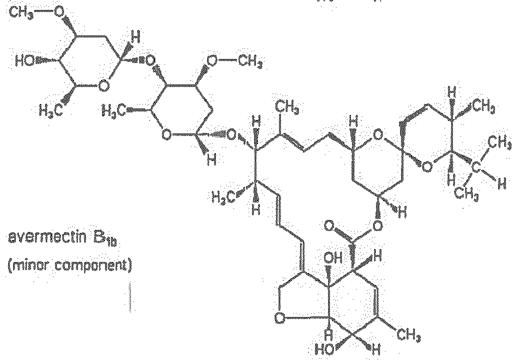 |
| Amicarbazone | 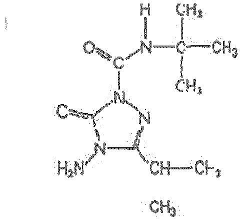 |
| Bifenthrin | 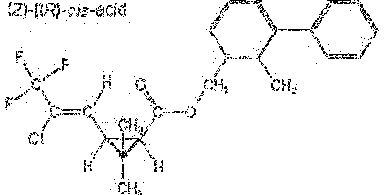 |
| | 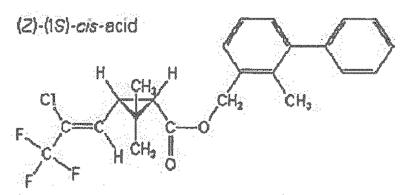 |
| Carbosulfan | 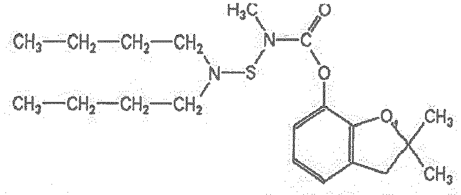 |
| Cyfluthrin | 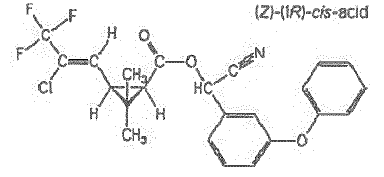 |
| | 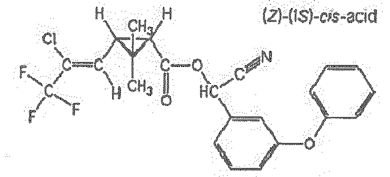 |
| Difenconazole | 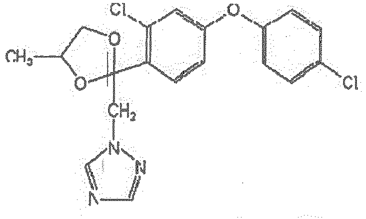 |
| Ethofenprox | 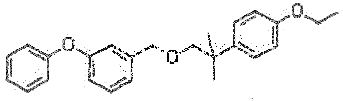 |
| Fenoxaprop-ethyl | 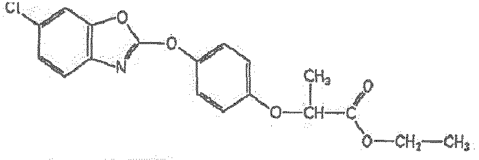 |
| Fipronil | 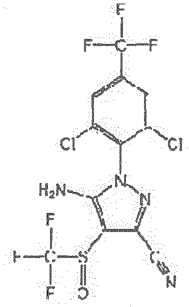 |
| Fenvalerate | 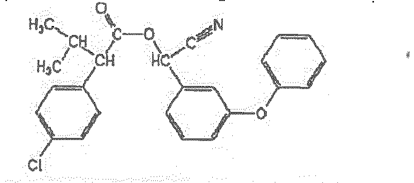 |
| Fluazifop-p-butyl | 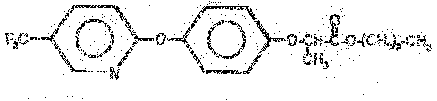 |
| Flufenoxuron | 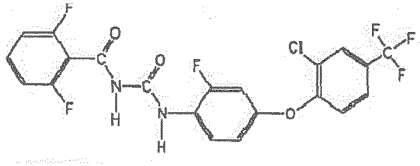 |
| Hexazinone | 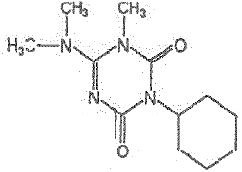 |
| Lambda-cyalothrin | 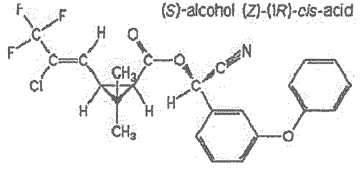 |
| | 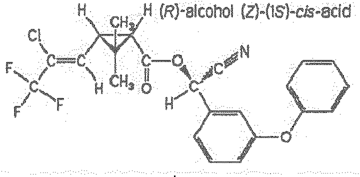 |
| Methomyl | 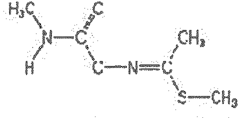 |
| Permethrin | 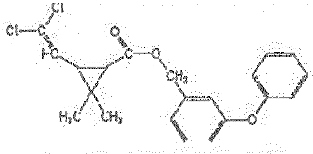 |
| Prochloraz | 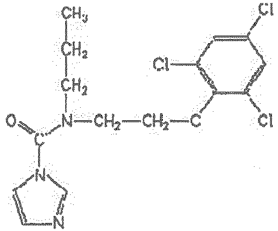 |
| Propiconazole | 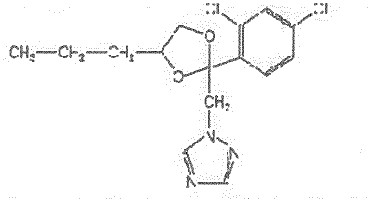 |
| Tebuconazole | 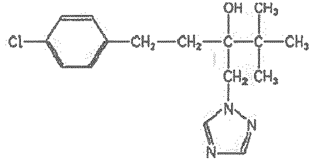 |
| Trifluralin | 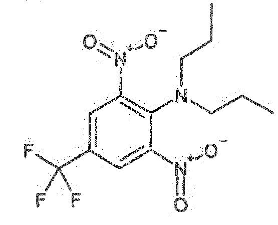 |
| Propoxur | 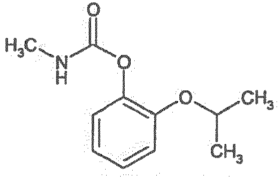 |
| Ethofumésate | 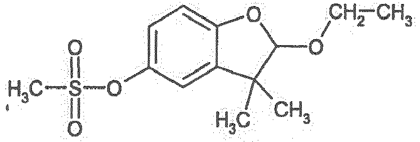 |

Selon un mode de réalisation, l'actif phytosanitaire est choisi parmi les composés suivants :
- Abamectin,
- Alachlor,
- Bromoxynil,
- Chlorpyrifos,
- Alpha-cyperméthrine,
- Cyfluthrin,
- Ethofenprox,
- Flufenoxuron,
- Lufenuron,
- Myclobutanil,
- Phenmedipham,
- Prochloraz,
- Propanil,
- Pendimethalin,
- Les azoles, de préférence les triazoles, de préférence le tebuconazole ou l'uniconazole,
- Triadimenol,
- Trifluralin,
- Oxyfluorfen,
- Imidacloprid,
- Ethofumesate,
- Diméthylphosphate (DMP),
- Dimethoate,
- Propoxur et leurs mélanges.

Ces produits et dénominations sont connus de l'homme du métier. On peut associer plusieurs produits phytosanitaires actifs.

La présente invention concerne également une formulation phytosanitaire telle que définie ci-dessus, dans laquelle la composition telle que définie ci-dessus représente de 10% à 90% en poids par rapport au poids de la formulation.

La formulation phytosanitaire peut également comprendre un agent tensioactif, de préférence un émulsifiant. Les agents émulsifiants sont des agents destinés à faciliter la mise en émulsion après mise en présence de la formulation avec de l'eau, et/ou à stabiliser (dans le temps et/ou en température) l'émulsion, par exemple en évitant une séparation des phases.

Le tensioactif peut être un tensioactif anionique, non ionique de préférence polyalcoxylé, cationique, amphotère (terme incluant aussi les tensioactifs zwitterioniques). Il peut s'agir d'un mélange ou d'une association de ces tensioactifs.

A titre d'exemples de tensioactifs anioniques, on peut citer, sans intention de s'y limiter :
- les acides alkylsulfoniques, les acides arylsulfoniques, éventuellement substitués par un ou plusieurs groupements hydrocarbonés, et dont la fonction acide est partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyle en C₁-C₃₀, de préférence en C₄-C₁₆, et/ou alcényles en C₂-C₃₀, de préférence en C₄-C₁₈,
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés),
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyle ; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé,
- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Les tensioactifs anioniques peuvent être sous forme acide (il sont potentiellement anioniques), ou sous une forme partiellement ou totalement salifiée, avec un contre-ion. Le contre-ion peut être un métal alcalin, tel que le sodium ou le potassium, un alcalino-terreux, tel que le calcium, ou encore un ion ammonium de formule N(R)₄⁺ dans laquelle R, identiques ou différents, représentent un atome d'hydrogène ou un groupe alkyle en C₁-C₄ éventuellement substitué par un atome d'oxygène.

A titre d'exemples de tensioactifs non ioniques, on peut citer, sans intention de s'y limiter :
- les phénols polyalcoxylés (éthoxylés, propoxylés, éthopropoxylés) substitués par au moins un groupe alkyle en C₄-C₂₀, de préférence en C₄-C₁₂, ou substitués par au moins un groupe alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphenols éthoxylés et/ou propoxylés, sulfatés et/ou phosphatés, on peut citer, le di-(phényl-1 éthyl)phénol éthoxylé, contenant 10 motifs oxyéthylénés, le di-(phényl-1 éthyl)phénol éthoxylé, contenant 7 motifs oxyéthylénés, le di-(phényl-1 éthyl)phénol éthoxylé sulfaté, contenant 7 motifs oxyéthylénés, le tri-(phényl-1 éthyl)phénol éthoxylé, contenant 8 motifs oxyéthylénés, le tri-(phényl-1 éthyl)phénol éthoxylé, contenant 16 motifs oxyéthylénés, le tri-(phényl-1 éthyl)phénol éthoxylé sulfaté, contenant 16 motifs oxyéthylénés, le tri-(phényl-1 éthyl)phénol éthoxylé, contenant 20 motifs oxyéthylénés, le tri-(phényl-1 éthyl)phénol éthoxylé phosphaté, contenant 16 motifs oxyéthylénés.
- les alcools ou les acides gras en C₆-C₂₂, polyalcoxylés (éthoxylés, propoxylés, éthopropoxylés). Le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol.
- les esters de sorbitan éventuellement polyalcoxylés (éthoxylés, propoxylés, éthopropoxylés), plus particulièrement les esters de sorbitol cyclisé d'acides gras de C₁₀ à C₂₀ comme l'acide laurique, l'acide stéarique ou l'acide oléique, et comprenant un nombre total de motifs alcoxylés compris entre 2 et 50.

Des émulsifiants utiles sont notamment les produits suivants, tous commercialisés par Rhodia :
- Soprophor® TSP/724 : tensioactif à base de tristyrylphénol éthopropoxylé
- Soprophor® 796/P : tensioactif à base de tristyrylphénol éthopropoxylé
- Soprophor® CY 8 : tensioactif à base de tristyrylphénol éthoxylé
- Soprophor® BSU : tensioactif à base de tristyrylphénol éthoxylé
- Alkamuls® RC : tensioactif à base d'huile de ricin éthoxylée
- Alkamuls® OR/36 : tensioactif à base d'huile de ricin éthoxylée
- Alkamuls® T/20 : tensioactif à base d'un ester de sorbitan éthoxylé
- Geronol® TBE724 : tensioactif à base de tristyrylphénol éthopropoxylé
- Geronol® TEB25 : mélange de tensioactifs à base d'huile de ricin ethoxylée, de dodécylbenzène sulfonate de calcium et de polymères alkoxylés.

La formulation phytosanitaire, concentrée, ne comprend de préférence pas des quantités importantes d'eau. Typiquement la teneur en eau est généralement inférieure à 10% en poids.

La formulation est de préférence une formulation liquide, par exemple sous forme d'un concentré émulsifiable (EC), d'une émulsion concentrée (EW), un concentré soluble (SL), une suspo-émulsion (SE) ou d'une microémulsion (ME). Dans ce cas elle comprend de préférence moins de 500 g/L d'eau, plus préférablement moins de 250 g/L. Elle sera généralement inférieure à 100 g/L.

Les formulations peuvent avantageusement comprendre :
a) de 0,01% à 90 % de préférence de 10% à 60%, du produit phytosanitaire, en poids de matière active,
b) de 10% à 92%, de préférence de 20% à 80%, de la composition selon la présente invention, en poids,
c) de 1 à 88%, de préférence de 2 à 78% en poids, d'au moins un cosolvant ou un autre solvant,
d) de 2% à 60%, de préférence de 5% à 50%, de préférence de 8% à 25%, en poids de matière sèche, d'un tensioactif,
e) de 0 à 50% de préférence de 0 à 20% en poids d'eau.

Il n'est pas exclu de réaliser des formulations solides, par exemple des formulations dans lesquelles un liquide comprenant le produit phytosanitaire solubilisé dans le solvant (composition de l'invention), est supporté par un minéral et/ou dispersé dans une matrice solide.

La formulation peut bien entendu comprendre d'autres ingrédients (ou "autres additifs") que le produit phytosanitaire actif, la composition de l'invention, le(s) autre(s) solvant(s), le(s) agent(s) émulsifiant(s) optionnel(s) et l'eau optionnelle. Elle peut notamment comprendre des agents de modification de la viscosité, des agents antimousse, notamment des antimousse siliconés, des agents anti-rebond, des agents anti-lessivage, des charges inertes, notamment des charges minérales, des agents anti-gel, des stabilisants, des colorants, des agents émétiques, des stickers (promoteurs d'adhésion)...

Notamment les formulations peuvent comprendre des co-solvants ou d'autres solvants. Ces autres solvants ou cosolvants sont préférentiellement choisis dans le groupe suivant :
∘ les hydrocarbures aliphatiques, saturés ou insaturés, linéaires ou ramifies, comprenant éventuellement un atome d'halogène, de phosphore, de soufre et/ou d'azote et/ou un groupe fonctionnel,
∘ les hydrocarbures carbocycliques ou hétérocycliques, saturés, insaturés ou aromatiques comprenant éventuellement un atome d'halogène, de phosphore, de soufre et/ou d'azote et/ou un groupe fonctionnel,

De façon encore plus avantageuse, ils sont choisis dans le groupe suivant :
▪ les alcanes, les cycloalcanes et les dérives aromatiques, par exemple les paraffines à chaîne linéaire ou ramifiée comme la « white oil » ou la décaline; les mono, di ou tri alkyl benzènes ou naphtalènes, les composés commercialisés sous la dénomination Solvesso 100, 150, 200 standard et grades ND ;
▪ les mono, di ou tri esters aliphatiques, cycloaliphatiques ou aromatiques, par exemple les alcanoates d'alkyle comme l'oléate de méthyle; les alcanoates de benzyle; les benzoates d'alkyle; la gamma butyrolactone; la caprolactone; les esters de glycérol et d'acide citrique; les salicylates d'alkyle; les phtalates; les dibenzoates; les acétoacétates; les acétates d'éther de glycol; le diacétate de dipropylène glycol ;
▪ les mono, di or tri phosphates d'alkyle comme par exemple le triéthyl phosphate; le tributyl phosphate, ou le tri-2-éthylhéxylphosphate ;
▪ les cétones aliphatiques, cycloaliphatiques, ou aromatiques comme par exemple les dialkyl cétones; les benzyl cétones; la fenchone ; l'acétophénone; la cyclohexanone; les alkyl cyclohexanone
▪ les alcools aliphatiques, cycloaliphatiques, ou aromatiques comme par exemple les glycols; le 2-éthylhexanol; le cyclohexanol ; les alcools benzyliques; l'alcool tetrahydrofurfurylique ;
▪ les éthers aliphatiques, cycloaliphatiques, ou aromatiques comme par exemple les éthers de glycol, notamment l'éthylène et le propylène glycol, et leurs polymères; l'éther diphénylique, le dipropylène glycol, l'éther monométhylique ou monobutylique, l'éther monobutylique de tripropylène glycol, les alcoxyalcanols, le diméthyl isosorbide ;
▪ les acides gras comme par exemple l'acide linoléique, l'acide linolénique, l'acide oléique ;
▪ les carbonates comme par exemple le carbonate de propylène ou de butylène, les lactates, les fumarates, les succinates, les adipates, les maléates ;
▪ les amides comme par exemple les alkyldiméthylamides, la diméthyldécanoamide ;
▪ les alkyl urées ;
▪ les amines comme par exemple les alcanolamines, la morpholine; les N-alkyl-pyrrolidones ;
▪ la tétraméthyl sulfone ;
▪ le diméthyl sulfoxide ;
▪ les halogénoalcanes ou les solvants aromatiques halogénés comme par exemple les chloroalcanes ou le chlorobenzene.

Peuvent également être présents dans les formulations, des inhibiteurs de cristallisation. Il peut s'agir des solvants mentionnés ci-dessus. Il peut également s'agir d'acides gras ou d'alcools gras non polyalkoxylés, on cite par exemple le produit Alkamuls® OL700 commercialisé par Rhodia, d'alkanolamides, de polymères etc.

Des procédés classiques de préparation de formulations phytosanitaires ou de mélanges de solvants peuvent être mis en oeuvre. On peut opérer par simple mélange des constituants.

La formulation phytosanitaire concentrée est généralement destinée à être répandue sur un champ cultivé ou à cultiver le plus souvent après dilution dans de l'eau, pour obtenir une composition diluée. La dilution est généralement opérée par l'exploitant agricole, directement dans un réservoir ("tank-mix"), par exemple dans le réservoir d'un dispositif destiné à répandre la composition. Il n'est pas exclu que l'exploitant ajoute d'autres produits phytosanitaires, par exemple des fongicides, herbicides, pesticides, insecticides, des fertilisants, des adjuvants... Ainsi, la formulation peut être utilisée pour préparer une composition diluée dans l'eau du produit phytosanitaire actif, par mélange d'au moins une part en poids de formulation concentrée avec au moins 10 parts d'eau, de préférence moins de 10000 parts. Les taux de dilution et les quantités à appliquer sur le champ dépendent généralement du produit phytosanitaire et de la dose souhaitable pour traiter le champ (cela peut être déterminé par l'exploitant agricole).

### DESCRIPTION DES FIGURES

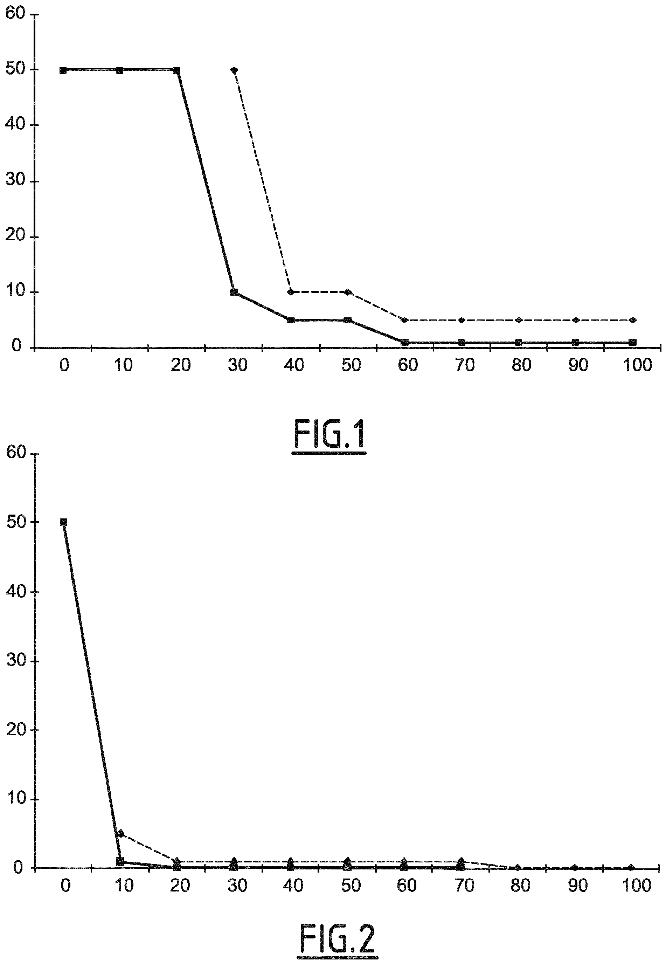

La **Figure 1** représente la solubilité dans l'eau d'une composition selon l'invention comprenant un mélange des solvants Rhodiasolv® Polarclean et Rhodiasolv® Iris, à différentes teneurs de chacun de ces produits.
   L'axe des abscisses représente la teneur du solvant Rhodiasolv® Iris dans le solvant Rhodiasolv® Polarclean et l'axe des ordonnées représente la solubilité du mélange de ces solvants dans l'eau (%w/w).
   La courbe en trait pointillé avec les losanges noirs représente des points où ledit mélange de solvants n'est pas soluble dans l'eau et la courbe en trait plein avec les carrés noirs représente des points où ledit mélange de solvants est soluble dans l'eau.
La **Figure 2** représente la solubilité dans l'eau d'une composition selon l'invention comprenant un mélange des produits Rhodiasolv® Polarclean et ADMA 810, à différentes teneurs de chacun de ces produits.
   L'axe des abscisses représente la teneur du solvant ADMA 810 dans le solvant Rhodiasolv® Polarclean et l'axe des ordonnées représente la solubilité du mélange de ces solvants dans l'eau (%w/w).
   La courbe en trait pointillé avec les losanges noirs représente des points où ledit mélange de solvants n'est pas soluble dans l'eau et la courbe en trait plein avec les carrés noirs représente des points où ledit mélange de solvants est soluble dans l'eau.

### EXEMPLES

On utilise les ingrédients suivants :
- Rhodiasolv® Polarclean (Rhodia) : mélange de composés de formule (I) avec R²=R³=CH₃ et R¹=-Z-COOMe où Z est un groupe alkylène en C4 ramifié
- Rhodiasolv® Iris (Rhodia) : Mélange de composition pondérale de 2-méthylglutarate de diméthyle (entre 70 et 95%), d'éthylsuccinate de diméthyle (entre 5 et 30%) et d'adipate de diméthyle (entre 0 à 10%) : (solvant diester)
- Rhodiasolv® ADMA 810 (Rhodia) : solvant alkyldiméthylamide (mélange 50/50 de composés avec des chaînes alkyle en C8 et C10)
- Rhodiasolv® ADMA 10 (Rhodia) : solvant alkyldiméthylamide (chaîne alkyle en C10)
- NMP : N-méthylpyrrolidone (BASF)
- Geronol TEB-25 (Rhodia) : mélange de tensioactifs DBS calcium et huile de ricin ethoxylée
- Geronol TBE-724 (Rhodia) : tensioactif comprenant plus de 50% en poids de tristyrylphénol éthopropoxylé
- Geronol PR-500 (Rhodia) : mélange de tensioactifs à base de dodécylsulfonate et d'alcools ethoxylés
- Rhodacal 60/BE (Rhodia) : tensioactif à base de dodécylbenzène sulfonate
- Antarox B/848 (Rhodia) : tensioactif à base d'alcool éthopropoxylé
- DMP : diméthylphosphate

### EXEMPLE 1 : Solubilité dans l'eau

La solubilité limite d'un solvant dans l'eau est mesurée par observation visuelle. Si à la concentration étudiée, le mélange est limpide, le solvant est alors considéré comme soluble dans l'eau à cette concentration. Si un trouble ou une séparation de phase est observable alors le solvant est considéré comme non miscible dans l'eau à cette concentration. Les mesures sont toutes réalisées à 20-25°C et les observations sont réalisées après maintien sous agitation pendant 24 heures afin de laisser le temps à l'équilibre de s'établir.

Les solubilités limites d'un mélange Rhodiasolv® Polarclean / Rhodiasolv® Iris, et d'un mélange Rhodiasolv® Polarclean / ADMA 810 sont indiquées respectivement dans les Figures 1 et 2.

### EXEMPLE 2: SOLUBILITÉ D'ACTIFS AGROCHIMIQUES DANS LES COMPOSITIONS DE L'INVENTION

### 1. Description des tests effectués :

Des formulations ont été préparées par dilution de divers actifs reportés ci-dessous dans le tableau dans les compositions 1 à 43 (solvants selon l'invention) et 4 et 5 (comparatifs) synthétisés ci-dessus :
a) Observation visuelle à 25°C : l'aspect de la formulation est noté et on repère éventuellement la présence de cristaux.
b) Observation visuelle à 0°C : la formulation est placée pendant 7 jours à 0°C et on note l'aspect de la formulation et on repère éventuellement la présence de cristaux (test CIPAC MT39).
c) Observation visuelle à 0°C avec nucléation (par introduction dans le liquide d'un cristal de l'actif pur) : on introduit un cristal de la matière active dans la formulation ayant passé 7 jours à 0°C pour nucléation, et on place à nouveau la formulation pendant 7 jours à 0°C. On note l'aspect de la formulation et on repère éventuellement la présence de cristaux ou la croissance du cristal introduit.

Les actifs utilisés sont disponibles commercialement. Lorsque la formation de cristaux d'actif est observée, le terme « Cristal » est indiqué dans les tableaux ci-dessous. Dans ce cas, le test suivant n'est pas effectué et le symbole « - » est reporté dans le tableau. Lorsque la solution reste limpide (absence de solide ou de trouble), c'est le terme « Limpide » qui est reporté dans les tableaux de résultats ci-dessous.

### 2. Résultats :

Les résultats sont consignés dans les tableaux suivants où les mélanges de solvants sont exprimés en volume.

| Solvants / n° | 1 | 2 | 3 | 4 (comp.) | 5 (comp.) |
|---|---|---|---|---|---|
| Rhodiasolv® Polarclean (A) | 42 | 53 | 50 | 100 | |
| ADMA 10 (B) | 28 | 20 | 18 | --- | 100 |
| Cyclohexyl acétate (B) | --- | --- | --- | --- | |
| Benzyl acétate (B) | 30 | 27 | 25 | --- | |
| Rhodiasolv® IRIS (B) | --- | --- | 7 | --- | |

Le tableau ci-après indique les résultats avec les solvants du tableau ci-dessus avec un mélange d'actifs éthofumésate (11%), phenmedipham (PMP)(9%) et DMP (7%) EC.

| Solvants | 1 | 2 | 3 | 4 | 5 |
|---|---|---|---|---|---|
| état de la solution à +25 °C | Limpide | Limpide | Légèrement trouble | Légèrement trouble | Légèrement trouble |
| état de la solution à 0°C | Limpide | Limpide | Quasi limpide | Limpide avec présence de solide (solution visqueuse) | Limpide avec présence de solide |
| état de la solution à 0°C après ensemencement | Limpide | Limpide | Limpide | Limpide avec présence de solide (solution visqueuse) | Limpide avec présence de solide |

Les compositions selon l'invention (1, 2 et 3) permettent donc de solubiliser le mélange d'actifs de façon satisfaisante, contrairement aux solvants comparatifs (4 et 5).

Les mélanges suivants ont également été préparés.

| Solvants / n° | 4 | 5 | 6 | 7 |
|---|---|---|---|---|
| Rhodiasolv® Polarclean (A) | 100 | --- | --- | 40 |
| ADMA 10 (B) | --- | 100 | --- | 60 |
| NMP (A) | --- | --- | 100 | --- |

Le tableau ci-après indique les résultats avec les solvants du tableau ci-dessus avec le tébuconazole à 300 g/L EC.

| Solvants | 4 (comp.) | 5 (comp.) | 6 (comp.) | **7** |
|---|---|---|---|---|
| Etat de la solution à +25 °C | Limpide | Limpide | Limpide | **Limpide** |
| Etat de la solution à 0°C | Limpide | Limpide | Limpide | **Limpide** |
| Etat de la solution à 0°C après ensemencement | Cristal | Cristal | Cristal | **Limpide** |

La composition selon l'invention (7) permet donc de solubiliser le tébuconazole de façon satisfaisante.

### EXEMPLE 3 : MISE EN ÉMULSION

Les formulations complètes sont évaluées en contrôlant la stabilité des émulsions dans des conditions maîtrisées. Les solutions de principes actifs et systèmes tensioactifs sont dispersées dans des eaux de dureté différentes (A : ; D : ; C : ) et les émulsions formées et stockées à température contrôlée sont observées après une durée définie. Les données ci-dessous rassemblent les résultats clés de cette étude.

Les valeurs numériques des tableaux représentent les hauteurs (exprimées en % volumique) de couche supérieure dans le cas d'une séparation de phase.
t : trouble
cr : formation de cristaux (rédhibitoire dans le test)
ol : formation d'une couche huileuse non miscible à l'eau

Les solvants suivants ont été utilisés :

**Composition des mélanges de solvants**

| Mélange | Mélange 0 (référence commerciale) | Mélange 1 (invention) | Mélange 2 (invention) |
|---|---|---|---|
| Rhodiasolv® Polarclean (A) | --- | 40 | 35 |
| ADMA 10 (B) | 100 | 60 | --- |
| ADMA 810 (B) | --- | --- | 65 |
| NMP (A) | --- | --- | --- |

A partir de ces solvants, ou de ces mélanges, plusieurs formulations d'actifs phytosanitaires ont été testées et les résultats sont indiqués dans les tableaux ci-après.

### Formulation 1

La formulation 1 comprend à titre d'actif phytosanitaire le tébuconazole à 250 g/l EC (émulsifiant = Geronol TEB-25 à 150 g/l).

Les résultats de stabilité des émulsions obtenues avec les mélanges 0, 1 et 2 tels que décrits ci-dessus sont indiqués dans les tableaux ci-après.

**Stabilité de l'émulsion à +30°C (concentration : 0,5%)**

| Durée (h) | Mélange 0 (référence commerciale) | | | Mélange 1 (invention) | | | Mélange 2 (invention) | | |
|---|---|---|---|---|---|---|---|---|---|
| | A | D | C | A | D | C | A | D | C |
| 1 | 0 | 0 | 0 | 0 | 0 | 0 | 0 | 0 | 0 |
| 2 | 0 | 0 | 0 | 0 | 0 | 0 | 0 | 0 | 0 |
| 24 | 1 | 1 | 0 | 0 | 0 | 0 | 0.01 | 0 | 0 |
| | Séparation de phase sous forme crémeuse | | | | | | | | |

On constate donc que toutes les émulsions avec le tébuconazole et les deux mélanges selon l'invention sont stables à 30°C jusque 24h sans séparation de phase, contrairement aux émulsions avec le mélange commercial.

**Stabilité de l'émulsion à +30°C (concentration : 5%)**

| Durée (h) | Mélange 0 (référence commerciale) | | | Mélange 1 (invention) | | | Mélange 2 (invention) | | |
|---|---|---|---|---|---|---|---|---|---|
| | A | D | C | A | D | C | A | D | C |
| 1 | 0 | 0 | 0 | 0 | 0 | 0 | 0 | 0 | 0 |
| 2 | 0 | 0 | 0 | 0 | 0 | 0 | 0 | 0 | 0 |
| 24 | 1 | 1 | 0 | 0 | 0 | 0 | 0.01 | 0 | 0 |
| | Séparation de phase sous forme crémeuse | | | | | | | | |

On constate donc que toutes les émulsions avec le tébuconazole et les deux mélanges selon l'invention sont stables à 30°C jusque 24h sans séparation de phase, contrairement aux émulsions avec le mélange commercial.

### Formulation 2

La formulation 2 comprend à titre d'actif phytosanitaire le tébuconazole à 250 g/l EC (émulsifiant = Geronol TEB-25 à 100 g/l).

**Stabilité de l'émulsion à +30°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 24 | 0,5 | 0,5 / 1 | 2 | 0 | 0 | 0 |
| | Séparation de phase sous forme crémeuse | | | | | |

On constate que les émulsions avec le tébuconazole et le mélange 1 selon l'invention sont stables à 30 °C jusque 24h sans séparation de phase, contrairement aux émulsions avec le mélange commercial.

### Formulation 3

La formulation 3 comprend à titre d'actif phytosanitaire le tébuconazole à 300 g/l EC (émulsifiant = Geronol TEB-25 à 100 g/l).

**Stabilité de l'émulsion à +30°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 24 | 0,5 | 0,5 / 1 | 2 | 0 | 0 | 0 |
| | Séparation de phase sous forme crémeuse | | | | | |

On constate que les émulsions avec le tébuconazole et le mélange 1 selon l'invention sont stables à 30 °C jusque 24h sans séparation de phase, contrairement aux émulsions avec le mélange commercial.

**Stabilité de l'émulsion à +54°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 24 | 0,5 | 0,5 / 1 | 2 | 0 | 0 | 0 |
| | Séparation de phase sous forme crémeuse | | | | | |

On constate que les émulsions avec le tébuconazole et le mélange 1 selon l'invention sont stables à 54°C jusque 24h sans séparation de phase, contrairement aux émulsions avec le mélange commercial.

**Stabilité de l'émulsion à 0°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 24 | 0,5 | 0,5 / 1 | 2 | 0 | 0 | 0 |
| | Séparation de phase sous forme crémeuse | | | | | |

On constate que les émulsions avec le tébuconazole et le mélange 1 selon l'invention sont stables à 0°C jusque 24h sans séparation de phase, contrairement aux émulsions avec le mélange commercial.

### Formulation 4

La formulation 4 comprend à titre d'actif phytosanitaire un mélange éthofumésate 11 % / phenmedipham 9% / DMP 7% EC (émulsifiant = Geronol TBE-724 à 150 g/l).

**Stabilité de l'émulsion à +30°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 4 | 0,5 | 0,5 / 1 | 2 | 0 | 0 | 0 |
| 24 | | | | 0 | 0 | 0 |
| 24h30 | | | | 0 | 0 | 0 |

On constate que les émulsions avec le mélange d'actifs et le mélange 1 selon l'invention sont plus stables à 30°C que les émulsions avec le mélange commercial.

**Stabilité de l'émulsion à +30°C (concentration : 5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |

On constate que les émulsions avec le mélange d'actifs et le mélange 1 selon l'invention sont stables.

Le test est reproduit après un stockage de la solution mère pendant 14 jours à +54 °C.

**Stabilité de l'émulsion à +30°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 4 | 0,5 | 0,5 / 1 | 2 | 0 | 0 | 0 |
| 24 | | | | 0 | 0 | 0 |
| 24h30 | | | | 0 | 0 | 0 |

On constate que les émulsions avec le mélange d'actifs et le mélange 1 selon l'invention sont stables, et notamment plus stables que celles obtenues avec le mélange commercial.

**Stabilité de l'émulsion à +30°C (concentration : 5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |

On constate que les émulsions avec le mélange d'actifs et le mélange 1 selon l'invention sont stables.

### Formulation 5

La formulation 5 comprend à titre d'actif phytosanitaire un mélange phenmedipham 13% / DMP 4% EC (émulsifiant = Geronol TBE-724 à 150 g/l).

**Stabilité de l'émulsion à +30°C (concentration : 0,5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |
| 4 | 0,5 | 0,5 / 1 | 2 | 0 | 0 | 0 |
| 24 | | | | 0 | 0 | 0 |
| 24h30 | | | | 0 | 0 | 0 |

On constate que les émulsions avec le mélange d'actifs et le mélange 1 selon l'invention sont stables.

**Stabilité de l'émulsion à +30°C (concentration : 5%)**

| Durée (h) | Mélange 0 (référence commerciale) | | | Mélange 1 (invention) | | |
|---|---|---|---|---|---|---|
| | A | D | C | A | D | C |
| 1 | 0 | 0 | 0 | 0 | 0 | 0 |
| 2 | 0 | 0 | 0 | 0 | 0 | 0 |

On constate que les émulsions avec le mélange d'actifs et le mélange 1 selon l'invention sont stables.

### EXEMPLE 4 : Préparation de compositions selon l'invention

Les compositions suivantes ont été préparées par mélange des solvants dans les proportions telles qu'indiquées ci-dessous.

| Example | Rhodiasolv® Polarclean | ADMA-10 | Diester Rhodiasolv® RPDE | Fatty acid methyl ester (Canola methyl ester) | Paramètres de solubilité Hansen | | |
|---|---|---|---|---|---|---|---|
| | | | | | δ_{D} ((J/cm³)^{½}) | δ_{P} ((J/cm³)^{½}) | δ_{H} ((J/cm³)^{½}) |
| 4.0 | 100 | 0 | 0 | 0 | 15,8 | 10,7 | 9,2 |
| 4.1 | 52,2% | 34% | 0% | 13,8% | 15,9 | 8,3 | 7,8 |
| 4.2 | 60% | 40% | 0% | 0% | 16,1 | 8,98 | 8,5 |
| 4.3 | 30% | 50% | 20% | 0% | 16,3 | 8,5 | 8,6 |

L'exemple 4.0 correspond au mélange comparatif 4 de l'exemple 2.

### EXEMPLE 5 : Solubilisation d'actifs par des mélanges de l'exemple 4

Les concentrés émulsionnables suivants ont été préparés en utilisant les mélanges de l'exemple 4.

Il a été observé que les compositions ainsi obtenues étaient stables et présentaient une bonne stabilité d'émulsion.

### Exemple 5.1.

**Formulation avec du Propanil 360 g/L**

| | |
|---|---|
| Propanil Tech. 98% | 367 g/L |
| Mélange de l'exemple 4.1 | 538 g/L |
| Geronol PR-500 | 170 g/L |

### Exemple 5.2.

**Formulation avec du Cypermethrin 20%**

| | |
|---|---|
| Cypermethrin Tech. 94,6% | 21,2 g/L |
| Mélange 7 de l'exemple 2 | 68,8 g/L |
| Geronol TBE-724 | 10,0 g/L |

### Exemple 5.3.

**Formulation avec de l'Oxyfluorfen 23%**

| | |
|---|---|
| Oxyfluorfen Tech. 95% | 24,2 g/L |
| Mélange 7 de l'exemple 2 | 65,8 g/L |
| Geronol TBE724 | 10,0 g/L |

### Exemple 5.4.

**Formulation avec du Prochloraz 450 g/L**

| | |
|---|---|
| Prochloraz tech. 96,9 % | 464 g/L |
| Mélange de l'exemple 4.2 | 564 g/L |
| Rhodacal 60/BE | 24 g/L |
| Antarox B/848 | 56 g/L |

Il a été constaté que toutes ces compositions EC (concentrés emulsionnables) sont peu visqueuses et ne génèrent aucune cristallisation de l'actif à 0°C pendant au moins 1 mois.

Les tests de stabilité à l'émulsification ont été réalisés selon la méthode CIPAC MT 36 et les résultats sont conformes aux exigences de l'industrie phytosanitaire.

### EXEMPLE 6 : Préparation de formulations avec le mélange de l'exemple 4.3.

Les formulations sous forme de concentrés émulsionnables ont été préparées en utilisant divers actifs agrochimiques.

| Actifs | Concentration de l'actif |
|---|---|
| Abamectin | 18 g/l |
| Flufenoxuron | 100 g/l |
| Lufenuron | 50 g/l |
| Oxyfluorfen | 240 g/l |
| Propanil | 360 g/l |
| Prochloraz | 450 g/l |
| Uniconazole | 50 g/l |
| Cyfluthrin | 100 g/l |
| Bromoxynil | 350 g/l |
| Ethofenprox | 30 % |
| Myclobutanil | 200 g/l |
| Ethofumesate - PMP - DMP | 11% - 9 % - 7 % |

Ainsi, le mélange de l'exemple 4.3. permet de solubiliser un très grand nombre d'ingrédients actifs, dont la plupart sont habituellement solubilisés dans des solvants toxiques tels que l'isophorone, la cyclohexanone ou la NMP.

Il a été constaté que toutes ces compositions EC (concentrés emulsionnables) sont peu visqueuses et ne génèrent aucune cristallisation de l'actif à 0°C pendant au moins 1 mois.

Les tests de stabilité à l'émulsification ont été réalisés selon la méthode CIPAC MT 36 et les résultats sont conformes aux exigences de l'industrie phytosanitaire.

## Revendications

1. Composition comprenant :
∘ de 10% à 90% en poids d'un mélange M de composés A de formule (I) :
R¹CONR²R³ (I)
ledit mélange comprenant au moins deux composés A répondant à des formules (I) différentes ;
où :
• R¹ est un groupe de formule -Z-COOR', Z étant un groupe alkylène divalent linéaire ou ramifié comprenant de 2 à 4 atomes de carbone et R' étant un groupe méthyle ;
• R² et R³, identiques ou différents, sont des groupes méthyle ou éthyle ;
∘ de 10% à 90% en poids d'au moins un composé B choisi parmi les solvants amides, éventuellement en association avec un solvant ester, les solvants amides étant choisis parmi les composés de formule (II) :
R"-CONMe₂ (II)
R" étant un groupe alkyle, linéaire ou ramifié, comprenant de 8 à 20 atomes de carbone.

2. Composition selon la revendication 1, dans laquelle le mélange M est un mélange de composés de formule (I) comprenant :
• un composé de formule (I) où R¹ est -CH(CH₂-CH₃)-CH₂-COOMe,
• un composé de formule (I) où R¹ est -CH₂-CH(CH₂-CH₃)-COOMe,
• un composé de formule (I) où R¹ est -CH(CH₃)-CH₂-CH₂-COOMe, et
• un composé de formule (I) où R¹ est -CH₂-CH₂-CH(CH₃)-COOMe.

3. Composition selon la revendication 2, dans laquelle le mélange M comprend en outre un composé de formule (I) où R¹ est -(CH₂)₄-COOMe.

4. Composition selon l'une quelconque des revendications 1 à 3, dans laquelle le mélange M comprend au moins un composé A de formule (I) dans laquelle R² et R³ sont des groupes méthyle.

5. Composition selon l'une quelconque des revendications 1 à 4, dans laquelle le composé B est un mélange comprenant au moins un solvant amide et au moins un solvant ester.

6. Composition selon la revendication 1, dans laquelle les solvants amides sont choisis parmi les composés de formule (II) où R" est choisi parmi les alkyles linéaires en C8, C10, C12, C18 et leurs mélanges, en toutes proportions.

7. Composition selon l'une quelconque des revendications 1 à 6, dans laquelle le solvant ester est choisi dans le groupe constitué du 2-éthylhexyl-lactate, des acétates d'alkyle, des esters d'acides gras, des esters gras d'acides carboxyliques et des mélanges de diesters méthyliques d'acide 2-éthylsuccinique, d'acide méthylglutarique et éventuellement d'acide adipique.

8. Composition selon l'une quelconque des revendications 1 à 7, comprenant :
- de 20% à 60% en poids du mélange M tel que défini à la revendication 2, et
- de 40% à 80% en poids du composé B tel que défini à l'une quelconque des revendications 1 à 7.

9. Procédé d'obtention d'une composition de solvants ayant une solubilité dans l'eau inférieure ou égale à 1% en poids à 20-25°C, **caractérisé en ce que** l'on mélange de 10% à 90% en poids d'au moins un mélange M tel que défini à l'une quelconque des revendications 1 à 4 avec de 10% à 90% en poids d'au moins un composé B tel que défini à l'une quelconque des revendications 1 à 7.

10. Utilisation de la composition selon l'une des revendications 1 à 8 comme solvant ayant une solubilité dans l'eau inférieure ou égale à 1% en poids à 20-25°C.

11. Formulation phytosanitaire comprenant au moins un actif phytosanitaire et, à titre de solvant d'au moins un actif phytosanitaire, la composition telle que définie à l'une quelconque des revendications 1 à 8.

12. Formulation phytosanitaire selon la revendication 11, sous la forme d'un concentré émulsionnable, d'une émulsion concentrée ou d'une microémulsion.

13. Formulation phytosanitaire selon la revendication 11 ou 12, dans laquelle l'actif phytosanitaire est choisi parmi les composés suivants :
- Abamectin,
- Alachlor,
- Bromoxynil,
- Chlorpyrifos,
- Alpha-cyperméthrine,
- Cyfluthrin,
- Etofenprox
- Flufenoxuron,
- Lufenuron,
- Myclobutanil,
- Phenmedipham,
- Prochloraz,
- Propanil,
- Pendimethalin,
- Les azoles, de préférence les triazoles, notamment le tebuconazole ou l'uniconazole,
- Triadimenol,
- Trifluralin,
- Oxyfluorfen,
- Imidacloprid,
- Ethofumesate,
- Diméthylphosphate,
- Dimethoate, et
- Propoxur ; et leurs mélanges.

14. Formulation phytosanitaire selon l'une quelconque des revendications 11 à 13, dans laquelle la composition telle que définie à l'une quelconque des revendications 1 à 8 représente de 10% à 90% en poids par rapport au poids de la formulation.

## Patentansprüche

1. Zusammensetzung, umfassend:
o 10 bis 90 Gew.-% einer Mischung M von Verbindungen A der Formel (I):
R¹CONR²R³ (I),
wobei die Mischung mindestens zwei Verbindungen A umfasst, die verschiedenen Formeln (I) entsprechen,
wobei:
• R¹ eine Gruppe der Formel -Z-COOR' ist, wobei Z eine gerade oder verzweigte zweiwertige Alkylengruppe mit 2 bis 4 Kohlenstoffatomen ist und R' eine Methylgruppe ist;
• R² und R³, die gleich oder verschieden sind, Methyl- oder Ethylgruppen sind;
∘ 10 bis 90 Gew.-% mindestens einer Verbindung B, ausgewählt aus Amid-Lösungsmitteln, gegebenenfalls in Kombination mit einem Ester-Lösungsmittel, wobei die Amid-Lösungsmittel aus Verbindungen der Formel (II) ausgewählt sind:
R"-CONMe₂ (II),
wobei R" eine gerade oder verzweigte Alkylgruppe mit 8 bis 20 Kohlenstoffatomen ist.

2. Zusammensetzung nach Anspruch 1, wobei die Mischung M ein Gemisch von Verbindungen der Formel (I) ist, umfassend:
• eine Verbindung der Formel (I), worin R¹-CH(CH₂-CH₃)-CH₂-COOMe ist,
• eine Verbindung der Formel (I), worin R¹-CH₂-CH(CH₂-CH₃)-COOMe ist,
• eine Verbindung der Formel (I), worin R¹-CH(CH₃)-CH₂-CH₂-COOMe ist, und
• eine Verbindung der Formel (I), worin R¹-CH₂-CH₂-CH(CH₃)-COOMe ist.

3. Zusammensetzung nach Anspruch 2, wobei die Mischung M ferner eine Verbindung der Formel (I) umfasst, worin R¹-(CH₂)₄-COOMe ist.

4. Zusammensetzung nach einem der Ansprüche 1 bis 3, wobei die Mischung M mindestens eine Verbindung A der Formel (I), worin R² und R³ Methylgruppen sind, umfasst.

5. Zusammensetzung nach einem der Ansprüche 1 bis 4, wobei die Verbindung B ein Gemisch ist, das mindestens ein Amid-Lösungsmittel und mindestens ein Ester-Lösungsmittel enthält.

6. Zusammensetzung nach Anspruch 1, wobei die Amid-Lösungsmittel aus den Verbindungen der Formel (II) ausgewählt sind, worin R" aus geraden C8-, C10-, C12-, C18-Alkylen und deren Gemischen in allen Verhältnissen ausgewählt ist.

7. Zusammensetzung nach einem der Ansprüche 1 bis 6, wobei das Ester-Lösungsmittel aus der Gruppe ausgewählt ist, bestehend aus 2-Ethylhexyllactat, Alkylacetaten, Fettsäureestern, Carbonsäurefettestern und Gemischen von 2-Ethylbernsteinsäure-, Methylglutarsäure- und gegebenenfalls Adipinsäuremethyldiestern.

8. Zusammensetzung nach einem der Ansprüche 1 bis 7, umfassend:
- 20 bis 60 Gew.-% der Mischung M nach Anspruch 2 und
- 40 bis 80 Gew.-% der Verbindung B nach einem der Ansprüche 1 bis 7.

9. Verfahren zum Erhalten einer Lösungsmittelzusammensetzung mit einer Wasserlöslichkeit von weniger als oder gleich 1 Gew.-% bei 20-25°C, **dadurch gekennzeichnet, dass** man 10 bis 90 Gew.-% mindestens einer Mischung M nach einem der Ansprüche 1 bis 4 mit 10 bis 90 Gew.-% mindestens einer Verbindung B nach einem der Ansprüche 1 bis 7 mischt.

10. Verwendung der Zusammensetzung nach einem der Ansprüche 1 bis 8 als Lösungsmittel mit einer Wasserlöslichkeit von weniger als oder gleich 1 Gew.-% bei 20-25°C.

11. Pflanzenschutzformulierung, umfassend mindestens einen Pflanzenschutzwirkstoff und als Lösungsmittel des mindestens einen Pflanzenschutzwirkstoffs die Zusammensetzung nach einem der Ansprüche 1 bis 8.

12. Pflanzenschutzformulierung nach Anspruch 11 in Form eines emulgierbaren Konzentrats, einer konzentrierten Emulsion oder einer Mikroemulsion.

13. Pflanzenschutzformulierung nach Anspruch 11 oder 12, wobei der Pflanzenschutzwirkstoff aus den folgenden Verbindungen ausgewählt ist:
- Abamectin,
- Alachlor,
- Bromoxynil,
- Chlorpyrifos,
- Alpha-Cypermethrin,
- Cyfluthrin,
- Etofenprox,
- Flufenoxuron,
- Lufenuron,
- Myclobutanil,
- Phenmedipham,
- Prochloraz,
- Propanil,
- Pendimethalin,
- Azolen, vorzugsweise Triazolen, insbesondere Tebuconazol oder Uniconazol,
- Triadimenol,
- Trifluralin,
- Oxyfluorfen,
- Imidacloprid,
- Ethofumesat,
- Dimethylphosphat,
- Dimethoat und
- Propoxur und deren Gemischen.

14. Pflanzenschutzformulierung nach einem der Ansprüche 11 bis 13, wobei die Zusammensetzung nach einem der Ansprüche 1 bis 8 10 bis 90 Gew.-%, bezogen auf das Gewicht der Formulierung, ausmacht.

## Claims

1. Composition comprising:
∘ from 10% to 90% by weight of a mixture M of compounds A of formula (I):
R¹CONR²R³ (I)
said mixture comprising at least two compounds A corresponding to different formulae (I);
wherein:
• R¹ is a group of formula -Z-COOR', Z being a linear or branched divalent alkylene group comprising from 2 to 4 carbon atoms and R' being a methyl group;
• R² and R³, which may be identical or different, are methyl or ethyl groups;
∘ from 10% to 90% by weight of at least one compound B chosen from amide solvents, optionally in combination with an ester solvent, the amide solvents being chosen from the compounds of formula (II):
R"-CONMe₂ (II)
R" being a linear or branched alkyl group comprising from 8 to 20 carbon atoms.

2. Composition according to Claim 1, in which the mixture M is a mixture of compounds of formula (I) comprising:
• a compound of formula (I) wherein R¹ is -CH(CH₂-CH₃)-CH₂-COOMe,
• a compound of formula (I) wherein R¹ is -CH₂-CH(CH₂-CH₃)-COOMe,
• a compound of formula (I) wherein R¹ is -CH(CH₃)-CH₂-CH₂-COOMe, and
• a compound of formula (I) wherein R¹ is -CH₂-CH₂-CH(CH₃)-COOMe.

3. Composition according to Claim 2, in which the mixture M also comprises a compound of formula (I) wherein R¹ is -(CH₂)₄-COOMe.

4. Composition according to any one of Claims 1 to 3, in which the mixture M comprises at least one compound A of formula (I) in which R² and R³ are methyl groups.

5. Composition according to any one of Claims 1 to 4, in which the compound B is a mixture comprising at least one amide solvent and at least one ester solvent.

6. Composition according to Claim 1, in which the amide solvents are chosen from the compounds of formula (II) wherein R" is chosen from C₈, C₁₀, C₁₂, C₁₈ linear alkyls and mixtures thereof, in any proportions.

7. Composition according to any one of Claims 1 to 6, in which the ester solvent is chosen from the group consisting of 2-ethylhexyl lactate, alkyl acetates, fatty acid esters, carboxylic acid fatty esters and mixtures of methyl diesters of 2-ethylsuccinic acid, of methylglutaric acid and optionally of adipic acid.

8. Composition according to any one of Claims 1 to 7, comprising:
- from 20% to 60% by weight of the mixture M as defined in Claim 2, and
- from 40% to 80% by weight of the compound B as defined in any one of Claims 1 to 7.

9. Process for obtaining a composition of solvents having a water-solubility of less than or equal to 1% by weight at 20-25°C, **characterized in that** from 10% to 90% by weight of at least one mixture M as defined in any one of Claims 1 to 4 is mixed with from 10% to 90% by weight of at least one compound B as defined in any one of Claims 1 to 7.

10. Use of the composition according to one of Claims 1 to 8, as solvent having a water-solubility of less than or equal to 1% by weight at 20-25°C.

11. Plant-protection formulation comprising at least one plant-protection active agent as, by way of solvent of at least one plant-protection active agent, the composition as defined in any one of Claims 1 to 8.

12. Plant-protection formulation according to Claim 11, in the form of an emulsifiable concentrate, a concentrated emulsion or a microemulsion.

13. Plant-protection formulation according to Claim 11 or 12, in which the plant-protection active agent is chosen from the following compounds:
- Abamectin,
- Alachlor,
- Bromoxynil,
- Chlorpyrifos,
- Alpha-cypermethrin,
- Cyfluthrin,
- Etofenprox,
- Flufenoxuron,
- Lufenuron,
- Myclobutanil,
- Phenmedipham,
- Prochloraz,
- Propanil,
- Pendimethalin,
- Azoles, preferably triazoles, preferably tebuconazole or uniconazole,
- Triadimenol,
- Triaflualin,
- Oxyfluorfen,
- Imidacloprid,
- Ethofumesate,
- Dimethyl phosphate,
- Dimethoate, and
- Propoxur; and mixtures thereof.

14. Plant-protection formulation according to any one of Claims 11 to 13, in which the composition as defined in any one of Claims 1 to 8 represents from 10% to 90% by weight relative to the weight of the formulation.
